# EUROPÄISCHE PATENTSCHRIFT

(11) **EP 0 985 305 B1**
(45) Veröffentlichungstag und Bekanntmachung des Hinweises auf die Patenterteilung: **13.08.2003**
(21) Anmeldenummer: 98931916.5
(22) Anmeldetag: 14.04.1998
(51) Int. Cl.: H04L 29/08, H04Q 11/04, H04Q 7/24

(54) **VERFAHREN UND VORRICHTING ZUR ÜBERTRAGUNG EINES KONTINUIERLICHEN DATENSTROMS IN PAKETIERTER FORM**
METHOD AND DEVICE FOR CONTINUOUS DATA STREAM TRANSMISSION IN PACKETISED FORM
PROCEDE ET DISPOSITIF DE TRANSMISSION EN CONTINU D'UN FLUX DE DONNEES PAR PAQUETS

(30) Priorität: 28.05.1997 DE 19722433
(43) Veröffentlichungstag der Anmeldung: 15.03.2000
(73) Patentinhaber: Infineon Technologies AG, 81669 München (DE)
(72) Erfinder: BOETZEL, Ulrich, D-41564 Kaarst (DE)
(74) Vertreter: Jannig, Peter, Dipl.-Ing.
(86) Internationale Anmeldenummer: DE9801052
(87) Internationale Veröffentlichungsnummer: WO98054876

(56) Entgegenhaltungen:
- EP-A- 0 712 218
- DE-A- 3 235 243
- IP W H ET AL: "CORDLESS ACCESS TO THE ISDN BASIC RATE SERVICE" UK TELETRAFFIC SYMPOSIUM,1. Januar 1993, Seiten 29.01-29.07, XP002052027

## Beschreibung

Die vorliegende Erfindung betrifft ein Verfahren gemäß dem Oberbegriff des Patentanspruchs 1 und eine Vorrichtung gemäß dem Oberbegriff des Patentanspruchs 5.

Ein derartiges Verfahren bzw. eine derartige Vorrichtung sind aus der DE 32 35 243 A1 bekannt.

Ein Verfahren bzw. eine Vorrichtung zur Übertragung eines kontinuierlichen Datenstroms werden beispielsweise, aber bei weitem nicht ausschließlich in nach dem DECT-Standard arbeitenden Funksystemen benötigt.

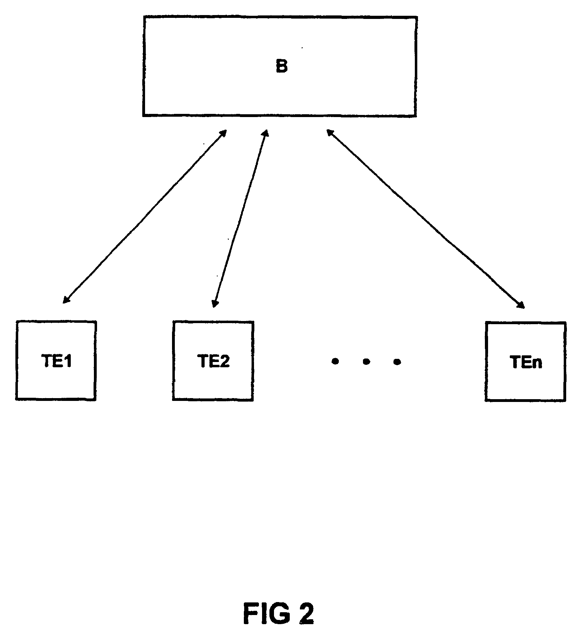

Der prinzipielle Aufbau eines nach dem DECT-Standard arbeitenden Funksystems ist in Figur 2 veranschaulicht.

Das in der Figur 2 gezeigte System besteht aus einer Basisstation B und mehreren schnurlosen Telekommunikationsendeinrichtungen TE1 bis TEn. Die schnurlosen Telekommunikationsendeinrichtungen TE1 bis TEn sind beispielsweise Mobiltelefone, welche in der Lage sind, über Funk mit der Basisstation B zu kommunizieren; anstelle der schnurlosen Telekommunikationsendeinrichtungen können auch schnurlose Anschlußdosen zum Anschluß schnurgebundener Telekommunikationsendeinrichtungen ("normale" Telefone, Faxgeräte, Modems, etc.) zum Einsatz kommen.

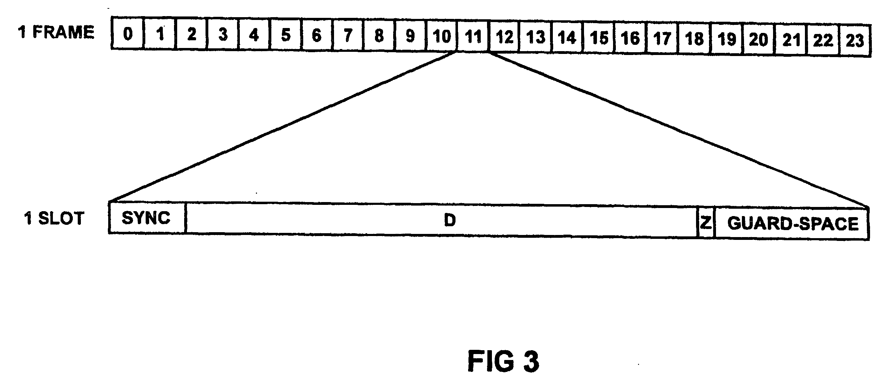

Die Datenübertragung zwischen der Basisstation B und den Telekommunikationsendeinrichtungen TE1, TE2, ... TEn (oder anderen Einrichtungen) erfolgt in Einheiten von sogenannten Frames und wird - soweit vorliegend erforderlich - nachfolgend anhand der Figur 3 erläutert. Wie aus der Figur 3 ersichtlich ist, setzt sich ein solcher Frame, genauer gesagt der hier betrachtete DECT-Full-Slot-Frame aus 24 sogenannten Timeslots bzw. Slots (Full-Slots) zusammen. Die ersten 12 der 24 Slots werden von der Basisstation zu den Telekommunikationsendeinrichtungen übertragen, und die sich daran anschließenden zweiten 12 Slots werden von den Telekommunikationsendeinrichtungen zur Basisstation übertragen. Genauer gesagt werden der nullte Slot eines jeden Frame von der Basisstation zu einer nullten Telekommunikationsendeinrichtung, der erste Slot von der Basisstation zu einer ersten Telekommunikationsendeinrichtung, der zweite Slot von der Basisstation zu einer zweiten Telekommunikationsendeinrichtung, ..., der elfte Slot von der Basisstation zu einer elften Telekommunikationsendeinrichtung, und umgekehrt der zwölfte Slot von der nullten Telekommunikationsendeinrichtung zur Basisstation, der dreizehnte Slot von der ersten Telekommunikationsendeinrichtung zur Basisstation, der vierzehnte Slot von der zweiten Telekommunikationsendeinrichtung zur Basisstation, ... und der dreiundzwanzigste Slot von der elften Telekommunikationsendeinrichtung zur Basisstation übertragen.

Ein Frame bzw. die 24 Slots eines Frames werden innerhalb von 10 ms übertragen. Jeder Slot umfaßt 480 Bits wird in rund 417 µs (in 416,66 µs) übertragen. Wie aus der Figur 3 ersichtlich ist, verteilen sich die 480 Bis auf ein 32 Bits breites Sync-Feld, ein 388 Bits breites D-Feld, ein 4 Bits breites Z-Feld, und ein 56 Bits breites Guard-Space-Feld.

Für die Übertragung der eigentlich interessierenden Nutzdaten (z.B. Sprachdaten) sind 320 Bits innerhalb des D-Feldes reserviert. Die Basisstation kann also innerhalb von 10 ms 320 Bits umfassende Nutzdaten zu jeder der Telekommunikationsendeinrichtungen versenden und die gleiche Menge an Nutzdaten von jeder der Telekommunikationsendeinrichtungen empfangen; die Übertragungsrate für Nutzdaten zwischen der Basisstation und jeder der Telekommunikationsendeinrichtungen beträgt also 32 kBit/s in jede Richtung.

Ist die Basisstation B am ISDN-Telekommunikationsnetz angeschlossen, so kann sie Nutzdaten mit einer Übertragungsrate von 64 kBit/s aus diesem empfangen und in dieses einspeisen.

Bei dem soeben erläuterten System ist die Nutzdaten-Übertragungsrate zwischen der Basisstation und dem ISDN-Telekommunikationsnetz mithin doppelt so hoch wie die Nutzdaten-Übertragungsrate zwischen der Basisstation und den angeschlossenen Telekommunikationsendeinrichtungen. Der Anschluß eines nach dem DECT-Standard arbeitenden Funksystem an das ISDN-Telekommunikationsnetz erfordert daher das Vorsehen besonderer Maßnahmen: entweder die zu übertragenden Daten werden zwischen der Basisstation und den Telekommunikationsendeinrichtungen komprimiert übertragen oder die zwischen der Basisstation und den Telekommunikationsendeinrichtungen zu übertragenden Daten werden anders als vorstehend beschrieben übertragen.

Handelt es sich bei den zu transferierenden Daten um Sprachdaten, so kann man mit einer komprimierten Übertragung derselben zwischen der Basisstation und den Telekommunikationsendeinrichtungen auskommen. Zwar treten hierbei Informationsverluste auf, doch sind diese in aller Regel tolerierbar.

Handelt es sich bei den zu transferierenden Daten hingegen um andere Daten als Sprachdaten, also beispielsweise von einem Computer, Faxgerät, Modem oder dergleichen versandte Daten, so können diese durch die Komprimierung so verstümmelt werden, daß sie dadurch unbrauchbar werden. Die zu übertragenden Daten müssen daher in solchen Fällen auch zwischen der Basisstation und den Telekommunikationsendeinrichtungen mit einer Rate von 64 kBit/s übertragen werden.

Eine Möglichkeit, um dies zu bewerkstelligen, ist die Verwendung des sogenannten LU7-Dienstes.

Der LU7-Dienst dient der Übertragung eines kontinuierlichen 64 kBit/s - Datenstroms in paketierter Form über den sogenannten MAC-Layer von DECT (Layer 2 nach dem OSI/ISO-Schichtenmodell) und ist in dem den sogenannten DLC-Layer von DECT (Layer 3 nach dem OSI/ISO-Schichtenmodell) betreffenden ETSI-Dokument ETS 300 175-4 definiert.

Die Steigerung der Datenübertragungsrate auf 64 kBit/s wird durch die Verwendung sogenannter Double-Slots ermöglicht.

Double-Slots sind, wie die Bezeichnung schon andeutet, doppelt so lang wie die "normalen" Full-Slots, umfassen also 960 Bits. Die gegenüber einem Full-Slot hinzugekommenen 480 Bits werden dabei jedoch nicht etwa auf alle Felder des Full-Slot verteilt, sondern ausschließlich dem die zu übertragenden Nutzdaten enthaltenden Abschnitt des D-Feldes zugeschlagen. Pro Double-Slot sind folglich 320 + 480 = 800 Bits übertragbar. Von diesen 800 Bits sind 80 Bits für Fehlerschutzdaten zur Fehlererkennung und Fehlerbehebung (FEC bzw. Forward Error Correction) reserviert, so daß für die reine Nutzdatenübertragung 720 Bits pro Double-Slot zur Verfügung stehen.

Durch die Verwendung von Double-Slots ändert sich die Länge eines Frame nicht; lediglich die Anzahl der Slots, die in einem Frame enthalten sind, also die Anzahl der Geräte, die an einer Basisstation eingebucht werden können, ändert sich dadurch.

Bei Verwendung von Double-Slots zur Datenübertragung zwischen der Basisstation und den daran angeschlossenen Geräten können demnach alle 10 ms (Dauer eines Frame) 720 Bits, also 72 kBit/s in beiden Richtungen übertragen werden. Dies ist sogar mehr als die angestrebten 64 kBit/s.

Die paketweise Übertragung eines kontinuierlichen Datenstroms erfordert sende- und empfangsseitig das Vorsehen einer Speichereinrichtung, in welcher die zu übertragenden Daten bestimmte Zeiten vor und nach deren Übertragung zwischenspeicherbar sind. Üblicherweise kommt hierbei ein sogenannter FIFO(First-In-First-Out)-Speicher zum Einsatz.

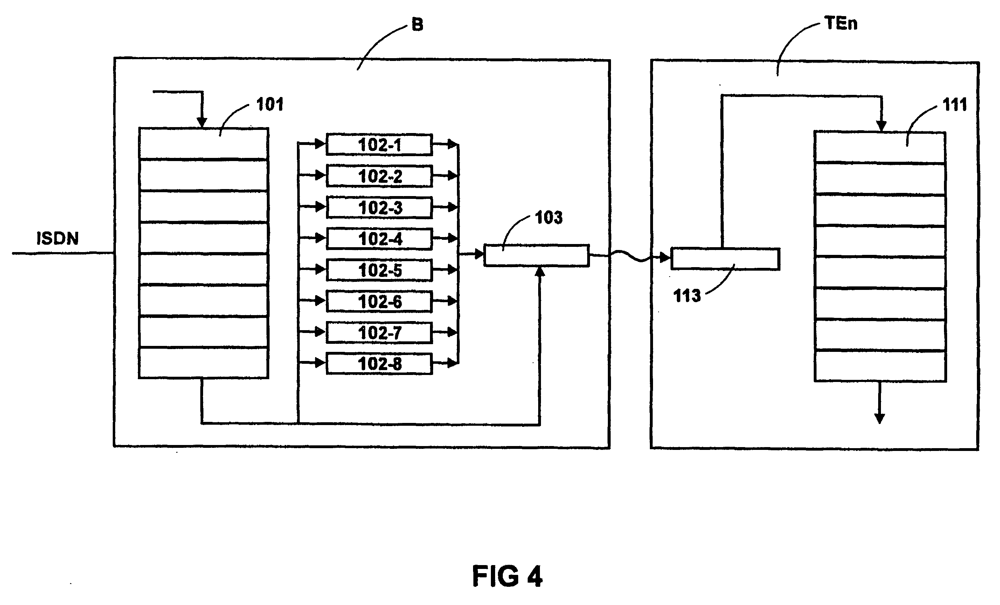

Der Aufbau einer Basisstation, welche in der Lage ist, von einem Telekommunikationsnetz mit 64 kBit/s erhaltene Nutzdaten mit 64 kBit/s an ein daran angeschlossenes Gerät (oder umgekehrt) weiterzuleiten, ist in Figur 4 veranschaulicht.

Es sei angenommen, daß die in der Figur 4 gezeigte Basisstation B an das ISDN-Telekommunikationsnetz angeschlossen ist und von diesem mit einer Rate von 64 kBit/s Nutzdaten erhält, welche an die Telekommunikationsendeinrichtung TEn weiterzuleiten sind.

Die vom ISDN-Telekommunikationsnetz erhaltenen Nutzdaten werden in der Basisstation B in einem dem DLC-Layer zuzurechnenden FIFO-Speicher 101 gespeichert. Der FIFO-Speicher weist eine Speicherkapazität von 640 Byte auf und ist folglich zur Speicherung einer Datenmenge ausgelegt, die bei der angestrebten Datenübertragungsrate von 64 kBit/s innerhalb von 8 DECT-Frames (80 ms) zur Telekommunikationsendeinrichtung TEn zu übertragen ist.

Die in den FIFO-Speicher 101 eingeschriebenen Daten werden in Einheiten von 80 Bytes ausgelesen, mit entsprechenden Signalisierungsdaten und den bereits erwähnten Fehlerschutzdaten zu einem Double-Slot zusammengesetzt und in einem dem MAC-Layer zuzurechnenden Sendepuffer 103 gespeichert. Das im Sendepuffer 103 gespeicherte Datenpaket wird aus diesem heraus zu der im betrachteten Beispiel ausschließlich als Empfangsstation wirkenden Telekommunikationsendeinrichtung TEn versandt. Die Telekommunikationsendeinrichtung TEn empfängt die von der Basisstation B versandten Daten und speichert sie zunächst in einem dem MAC-Layer zuzurechnenden Empfangspuffer 113. Die Daten werden sodann aus dem Empfangspuffer ausgelesen, von den Signalisierungs- und Fehlerschutzdaten befreit und in einen dem DLC-Layer zuzurechnenden FIFO-Speicher 111 umgespeichert. Der FIFO-Speicher 111 enthält von den übertragenen Double-Slot-Datenpaketen ausschließlich die darin enthaltenen Nutzdaten und stellt diese zur Abholung bereit.

Wie bei jeder Datenübertragung kann es auch bei der vorstehend beschriebenen zu Fehlern kommen. Die Fehlerraten werden im betrachteten Beispiel durch eine Kombination eines ARQ (Automatic Repeat Request)-Ansatzes und des bereits erwähnten FEC(Forward Error Correction)-Ansatzes gering gehalten. D.h., die Daten werden in der Empfangsstation unter Verwendung der mitversandten Fehlerschutzdaten auf deren Richtigkeit hin überprüft, und wenn erkannt wird, daß ein Übertragungsfehler vorliegt, wird dieser Fehler entweder in der Empfangsstation berichtigt (Forward Error Correction) oder - falls dies nicht möglich ist - es wird eine wiederholte Übertragung des fehlerhaften Double-Slot veranlaßt (Automatic Repeat Request).

Um die Übertragung eines bestimmten Double-Slot wiederholen zu können, müssen die von der Sendestation versandten Daten auch nach dem Versenden noch eine gewisse Zeit gespeichert werden. Zu diesem Zweck sind im betrachteten Beispiel acht Übertragungswiederholungs-Zwischenspeicher 102-1 bis 102-8 vorgesehen. Jeder dieser Übertragungswiederholungs-Zwischenspeicher weist ein Kapazität von 80 Byte (90 Byte, wenn auch bei der Übertragungswiederholung auftretende Fehler durch eine Übertragungswiederholung korrigiert werden können sollen) auf, kann also jeweils die Nutzdatenmenge speichern, die durch einen Double-Slot übertragen wird. Die Übertragungswiederholungs-Zwischenspeicher 102-1 bis 102-8 werden mit den im FIFO-Speicher 101 gespeicherten Daten beschrieben, wenn diese ausgelesen werden, um (zusammen mit hinzugefügten Signalisierungs- und Fehlerschutzdaten) im Sendespeicher 103 abgelegt (zum Versenden bereitgestellt) zu werden.

Durch das Wiederholen der Übertragung eines Double-Slot muß - jedenfalls über einen längeren Zeitraum gesehen - die Übertragungsrate der fehlerfrei übertragenen Daten nicht verringert werden. Wie vorstehend bereits erwähnt wurde, werden nämlich im (fehlerfreien) Normalfall pro Double-Slot "nur" 80 Byte Nutzdaten übertragen, obgleich 90 Byte Nutzdaten übertragen werden könnten. Nutzt man die zur Verfügung stehende Kapazität voll aus, so können durch acht Double-Slots so viele Daten übertragen werden wie in neun normal genutzten Double-Slots übertragen werden könnten. D.h., eine gegebenenfalls erforderliche Wiederholung der Übertragung der in einem Double-Slot enthaltenen Daten kann ohne eine Erhöhung der Anzahl der zu übertragenden Double-Slots bewerkstelligt werden. Zwar tritt kurzzeitig eine Unregelmäßigkeit in der Nutzdaten-Übertragungsrate auf, doch ist bereits nach acht Double-Slots wieder der Zustand erreicht, der herrschen würde, wenn keine Übertragungswiederholung erforderlich gewesen wäre. Ein Übertragungsfehler, den es durch eine Übertragungswiederholung zu beseitigen gilt, verhindert nicht, daß in der Basisstation B die angelieferten Daten ohne Unterbrechung entgegengenommen werden können, und daß in der Telekommunikationsendeinrichtung TEn die erwarteten Daten ohne Unterbrechung (aus dem FIFO-Speicher 111) erhalten werden können; die kurzzeitig schwankende Übertragungsrate von fehlerfrei übermittelten Nutzdaten kann infolge der Pufferung der Daten in der Basisstation B und der Telekommunikationsendeinrichtung TEn nach außen hin unbemerkt bleiben.

Die beschriebene Art und Weise der Datenübertragung ermöglicht mithin eine fehlerfreie Datenübertragung mit hoher Datenübertragungsrate. Allerdings ist, wie aus den vorstehenden Erläuterungen ersichtlich ist, ein erheblicher Aufwand erforderlich, um die Fehlerfreiheit der Datenübertragung gewährleisten zu können.

Der vorliegenden Erfindung liegt daher die Aufgabe zugrunde, das Verfahren gemäß dem Oberbegriff des Patentanspruchs 1 bzw. die Vorrichtung gemäß dem Oberbegriff des Patentanspruchs 5 derart weiterzubilden, daß der Aufwand, der getrieben werden muß, um die Fehlerfreiheit der Datenübertragung gewährleisten zu können, möglichst gering gehalten wird.

Diese Aufgabe wird erfindungsgemäß durch die in Patentanspruch 1 (Verfahren) bzw. die in Patentanspruch 5 (Vorrichtung) beanspruchten Merkmale gelöst.

Vorteilhafte Weiterbildungen der Erfindung sind Gegenstand der Unteransprüche.

Die Erfindung wird nachfolgend anhand eines Ausführungsbeispiels unter Bezugnahme auf die Zeichnung näher erläutert. Es zeigen
- Figur 1: eine Darstellung zur Erläuterung des neuartigen inneren Aufbaus einer Basisstation und einer daran angeschlossenen Telekommunikationsendeinrichtung eines nach dem DECT-Standard arbeitenden Funksystems,
- Figur 2: den Aufbau eines nach dem DECT-Standard arbeitenden Funksystems,
- Figur 3: das Format der Daten, die zwischen einer Basisstation und mit dieser kommunizierenden Telekommunikationsendeinrichtungen ausgetauscht werden, und
- Figur 4: eine Darstellung zur Erläuterung eines normalen inneren Aufbaus einer Basisstation und einer daran angeschlossenen Telekommunikationsendeinrichtung eines nach dem DECT-Standard arbeitenden Funksystems.

Das erfindungsgemäße Verfahren und die erfindungsgemäße Vorrichtung werden nachfolgend anhand eines nach dem DECT-Standard arbeitenden Funksystems beschrieben. Die Anwendung der Erfindung ist jedoch nicht auf einen derartigen Einsatz beschränkt; sie ist grundsätzlich bei für beliebige Zwecke durchgeführten Datenübertragungen zwischen beliebigen Einrichtungen einsetzbar.

Der prinzipielle Aufbau des betrachteten DECT-Systems unterscheidet sich - abgesehen von den die Datenübertragung betreffenden Details - nicht von dem in der Figur 2 veranschaulichten System.

Auch das in der Figur 3 veranschaulichte Format der Daten, die zwischen einer Basisstation und den an dieser eingebuchten Mobiltelefonen ausgetauscht werden, ist im wesentlichen gleich. Anstelle des in der Figur 3 gezeigten Full-Slot werden jedoch Double-Slots übertragen, welche sich von Full-Slots jedoch "nur" darin unterscheiden, daß der die eigentlich zu übertragenden Nutzdaten enthaltende Teil des D-Feldes beim Double-Slot um eine Full-Slot-Länge, d.h. um 480 Bits umfangreicher ist, also insgesamt 800 Bits umfaßt, von denen 720 Bits zur Nutzdatenübertragung verwendbar sind; 80 Bits sind für Fehlerschutzdaten zur FEC-Durchführung reserviert.

Wie eingangs bereits erwähnt wurde, können bei der Verwendung von Double-Slots zwischen der Basisstation B und jeder der (bis zu sechs) angeschlossenen Telekommunikationsendeinrichtungen TE1, TE2, ... TEn in beiden Richtungen alle 10 ms 720 Bits von den eigentlich zu übertragenden Nutzdaten, also 72 kBit/s übertragen werden. Die Basisstation B sei im betrachteten Beispiel an ein ISDN-Telekommunikationsnetz angeschlossen und dazu ausgelegt, die Daten eines ISDN-B-Kanals, also 64 kBit/s zu einer der Telekommunikationsendeinrichtungen zu versenden und von dieser zu empfangen.

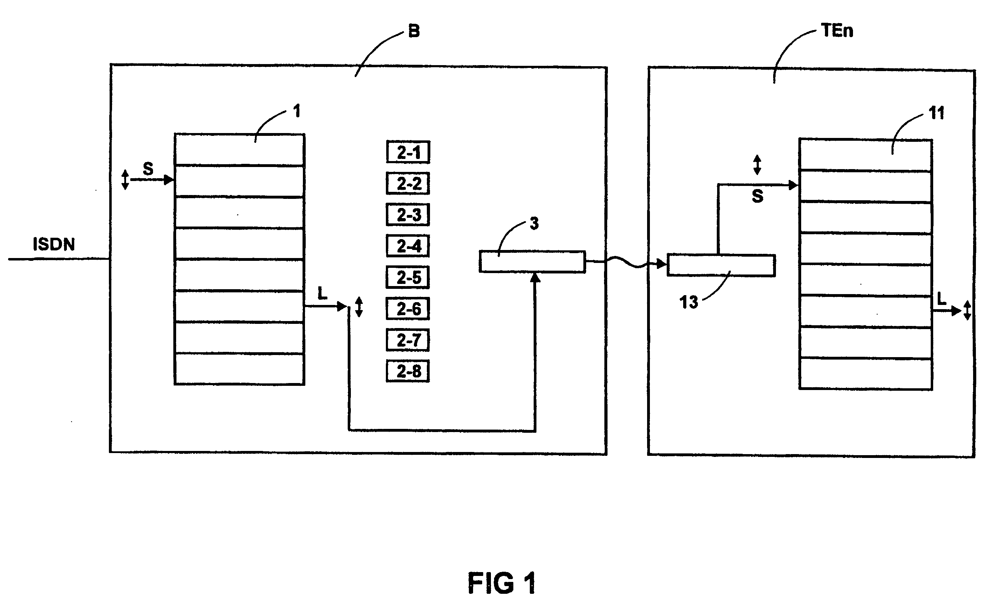

Ein vorteilhafter innerer Aufbau der Basisstation B und der Telekommunikationsendeinrichtung TEn, durch den sich die besagte schnelle Datenübertragung auf relativ einfache Weise fehlerfrei durchführen läßt, ist in Figur 1 veranschaulicht.

Die Basisstation B, welche im betrachteten Beispiel ausschließlich als Sendestation wirken möge, enthält einen dem DLC-Layer zuzurechnenden zyklischen Puffer 1, acht ebenfalls dem DLC-Layer zuzurechnende Lesezeiger-Zwischenspeicher 2-1 bis 2-8, und einen dem MAC-Layer zuzurechnenden Sendepuffer 3.

Der zyklische Puffer 1 dient zur Zwischenspeicherung der zur Telekommunkationsendeinrichtung TEn zu übertragenden Nutzdaten. Er kann als Standard-RAM realisiert sein und weist im betrachteten Beispiel eine Speicherkapazität von 640 Bytes auf. Die 640 Bytes entsprechen, wie aus der nachfolgenden Beschreibung noch besser verstanden werden wird, der Nutzdatenmenge, die im Normalfall durch 8 Double-Slots innerhalb von 8 DECT-Frames an die Telekommunikationsendeinrichtung TEn zu übertragen ist.

Dem zyklischen Puffer 1 sind ein Schreibzeiger S und ein davon unabhängiger Lesezeiger L zugeordnet, welche nach jedem Einschreiben bzw. Auslesen von Daten automatisch inkrementiert werden und nach Art eines sogenannten Modulozählers bei Erreichen des Speicherendes automatisch an den Speicheranfang zurückspringen (oder umgekehrt); der Schreibzeiger S und der Lesezeiger L sind jedoch jederzeit auch außerplanmäßig an beliebige Stellen innerhalb des zyklischen Puffers versetzbar.

Die Lesezeiger-Zwischenspeicher 2-1 bis 2-8 dienen zur Zwischenspeicherung der Adressen, von welchen an die durch einen jeweiligen Double-Slot im Normalfall zu übertragenden Nutzdaten im zyklischen Puffer gespeichert sind. Sie sind in einer Anzahl vorhanden, die gleich der Anzahl der Frames bzw. Double-Slots ist, die im Normalfall zur Übertragung der im zyklischen Puffer 1 speicherbaren Datenmenge benötigt wird.

Der Sendepuffer 3 dient dazu, die zu übertragenden Daten zusammen mit Signalisierungs- und Fehlerschutzdaten im Double-Slot-Format zum Versenden bereitzustellen.

Die Telekommunikationsendeinrichtung TEn, welche im betrachteten Beispiel ausschließlich als Empfangsstation wirken möge, enthält einen dem MAC-Layer zuzurechnenden Empfangspuffer 13 und einen dem DLC-Layer zuzurechnenden zyklischen Puffer 11.

Der zyklische Puffer 11 dient zur Zwischenspeicherung der von der Basisstation B empfangenen Nutzdaten und entspricht im übrigen dem zyklischen Puffer 1.

Der Empfangspuffer 13 dient als Eingangspuffer für die von der Basisstation empfangenen Double-Slots.

Die Basisstation B ist, wie vorstehend bereits erwähnt wurde, an das in der Figur 1 mit ISDN bezeichnete ISDN-Telekommunikationsnetz angeschlossen. Aus den über das ISDN-Telekommunikationsnetz erhaltenen Daten werden die über einen der B-Kanäle erhaltenen Nutzdaten extrahiert, in einen kontinuierlichen Datenstrom (64 kBit/s) umgewandelt und (unter fortlaufender Inkrementierung des Schreibzeigers S) in den zyklischen Puffer 1 eingeschrieben. Nachdem eine bestimmte Datenmenge in den zyklischen Puffer 1 eingeschrieben wurde, wird damit begonnen, die gespeicherten Daten (unter fortlaufender Inkrementierung des Lesezeigers L) auszulesen, um sie zusammen mit hinzugefügten Signalisierungs- und Fehlerschutzdaten in Double-Slots zur Telekommunikationsendeinrichtung TEn zu übertragen. Das Auslesen von Daten aus dem zyklischen Puffer 1 erfolgt in Einheiten von 80 Bytes (640 Bits). Die ausgelesenen 80 Bytes Nutzdaten werden mit den Signalisierungsund Fehlerschutzdaten zu einem insgesamt 960 Bits umfassenden Datenpaket im Double-Slot-Format zusammengesetzt und in den Sendepuffer 3 eingespeichert. Von dort aus wird das Datenpaket als Double-Slot zur Telekommunikationsendeinrichtung TEn übertragen. Die Telekommunikationsendeinrichtung TEn empfängt den Double-Slot und speichert ihn zunächst im Empfangspuffer 13. Sie liest sodann die im Empfangspuffer 13 gespeicherten Daten aus, befreit sie von den Signalisierungsund Fehlerschutzdaten und speichert die Nutzdaten in den zyklischen Puffer 11 ein. Nachdem eine vorbestimmte Datenmenge in den zyklischen Puffer 11 eingeschrieben wurde, kann damit begonnen werden, Daten mit einer Rate von 64 kBit/s kontinuierlich aus diesem auszulesen.

Bei den vorstehenden Erläuterungen der im System gemäß Figur 1 stattfindenden Vorgänge wurde davon ausgegangen, daß die Datenübertragung von der Basisstation B zur Telekommunikationsendeinrichtung TEn fehlerfrei oder nur mit solchen Fehlern behaftet erfolgte, die in der Telekommunikationsendeinrichtung TEn unter Verwendung der mitübertragenen Fehlerschutzdaten korrigiert werden können.

Die von der Telekommunikationsendeinrichtung TEn empfangenen Daten werden jedoch vor deren Verwendung einer Überprüfung unterzogen, durch welche anhand der mitübertragenen Fehlerschutzdaten überprüft wird, ob der betreffende Double-Slot fehlerfrei übertragen wurde. Wird dabei festgestellt, daß die Übertragung nicht fehlerfrei erfolgte, so wird durch die Telekommunikationsendeinrichtung TEn versucht, den Fehler unter Verwendung der Fehlerschutzdaten zu korrigieren. Kann der Fehler nicht korrigiert werden, bedarf es einer erneuten Übertragung des Double-Slot. Diese im betrachteten LU7-Dienst praktizierte Methode zur Fehlerreduktion ist, wie eingangs bereits erwähnt wurde, die Kombination eines ARQ- und FEC-Ansatzes.

Die Basisstation B überwacht fortlaufend, ob eine Wiederholung der Übertragung eines Double-Slot erforderlich ist. Erkennbar ist dies an einer ausbleibenden Bestätigung des Empfangs des betreffenden Double-Slot durch die Telekommunikationsendeinrichtung TEn und/oder durch eine ausdrückliche entsprechende Aufforderung seitens der Telekommunikationsendeinrichtung TEn.

Stellt die Basisstation fest, daß ein bestimmter Double-Slot erneut zu übertragen ist, so überträgt sie den betreffenden Double-Slot ein weiteres Mal. Anders als bei einer fehlerfreien Übertragung werden dann jedoch vorübergehend (für acht Double-Slots) nicht nur jeweils 80 Bytes, sondern die maximal möglichen 90 Bytes Nutzdaten pro Double-Slot übertragen. Dadurch kann pro Double-Slot das 1,125-fache der Nutzdaten übertragen werden, die normalerweise (im fehlerfreien Betrieb) pro Double-Slot übertragen werden. D.h., nach der Übertragung von acht voll genutzten Double-Slots sind trotz der wiederholten Übertragung eines Double-Slot so viele Daten übertragen wie übertragen wären, wenn kein Übertragungsfehler aufgetreten wäre und die Double-Slots normal (nur teilweise) genutzt worden wären.

Für den Fall, daß bestimmte Daten wiederholt übertragen werden müssen, kann der Lesezeiger L des zyklischen Puffers 1 nicht mehr wie üblich einfach nur inkrementiert werden, um die begehrten Daten auslesen zu können. Da die wiederholt zu übertragenden Daten bereits einmal aus dem zyklischen Puffer ausgelesen wurden, muß der Lesezeiger L zurückversetzt werden.

Dies geschieht im betrachteten Beispiel mit Hilfe der Lesezeiger-Zwischenspeicher 2-1 bis 2-8. In den besagten Lesezeiger-Zwischenspeichern 2-1 bis 2-8 sind jeweils die Adressen gespeichert, von denen an die durch einen Double-Slot zu übertragenden Daten im zyklischen Puffer gespeichert sind.

Sind nun bestimmte Daten durch die Basisstation erneut zu übertragen, so wird der Lesezeiger L entsprechend dem Eintrag im zugeordneten Lesezeiger-Zwischenspeicher versetzt, worauf die begehrten Daten aus dem zyklischen Puffer 1 wie üblich ausgelesen werden können. Das Vorsehen eines separaten Übertragungswiederholungs-Zwischenspeichers (102-1 bis 102-8 in Figur 4) ist nicht erforderlich. Es muß lediglich darauf geachtet werden, daß der Schreibzeiger S jeweils so weit vom Lesezeiger L entfernt ist, daß die aus dem zyklischen Puffer wiederholt zu lesenden Daten und die noch nicht gelesenen Daten nicht schon überschrieben werden, bevor sie gelesen werden können.

Die Lesezeiger-Zwischenspeicher 2-1 bis 2-8 müssen bei Bedarf selbstverständlich aktualisiert werden.

Unabhängig davon gestalten sich der Aufbau und der Betrieb eines wie beschrieben aufgebauten Datenübertragungssystems erheblich einfacher als wenn ein FIFO-Speicher als Nutzdaten-Zwischenspeicher verwendet werden würde.

Insbesondere kann - wie vorstehend bereits erläutert wurde - bei Verwendung eines zyklischen Puffers anstelle des FIFO-Speichers auf das Vorsehen eines separaten Übertragungswiederholungs-Zwischenspeichers verzichtet werden. Darüber hinaus kann auch das bei FIFO-Speichern erforderliche ständige Umspeichern oder Weiterschieben der darin gespeicherten Daten entfallen.

Das beschriebene Datenübertragungssystem hat einen geringeren Platzbedarf, verbraucht weniger Energie und erhitzt sich nicht so stark.

Das beschriebene Verfahren und die beschriebene Vorrichtung ermöglichen es daher, daß der Aufwand, der getrieben werden muß, um die Fehlerfreiheit der Datenübertragung gewährleisten zu können, auf ein Minimum zu reduziert werden kann.

## Patentansprüche

1. Verfahren zur Übertragung eines kontinuierlichen Datenstroms unter Verwendung eines zyklischen Puffers (1), in welchem die Daten bestimmte Zeiten vor und nach deren Übertragung zwischenspeicherbar sind,
**dadurch gekennzeichnet,**
**daß** die Daten in paketierter Form übertragen werden, und daß die Adressen, von welchen an die Daten der im zyklischen Puffer (1) gespeicherten Datenpakete dort gespeichert sind, in Lesezeiger-Zwischenspeichern (2-1 - 2-8) zwischengespeichert werden.

2. Verfahren nach Anspruch 1,
**dadurch gekennzeichnet,**
**daß** die zu übertragenden Daten unmittelbar vor deren Übertragung aus dem zyklischen Puffer (1) ausgelesen und zusammen mit Signalisierungs- und Fehlerschutzdaten in einem Sendepuffer (3) zum Versenden bereitgestellt werden.

3. Verfahren nach Anspruch 1 oder 2,
**dadurch gekennzeichnet,**
**daß** Datenpakete, die nicht fehlerfrei übertragen werden, erneut übertragen werden.

4. Verfahren nach Anspruch 2 oder 3,
**dadurch gekennzeichnet,**
**daß** die Startadresse, ab welcher die zu übertragenden Daten aus dem zyklischen Puffer (1) zu lesen sind, zumindest bei einer erneuten Übertragung der Daten aus einem Lesezeiger-Zwischenspeicher (2-1 - 2-8) besorgt werden.

5. Vorrichtung zur Übertragung eines kontinuierlichen Datenstroms mit einem zyklische Puffer (1), in welchem die Daten bestimmte Zeiten vor und nach deren Übertragung zwischenspeicherbar sind,
**dadurch gekennzeichnet,**
**daß** mittel vorhanden sind zur Übertragung der Daten in paketierter Form, und daß eine Vielzahl von Lesezeiger-Zwischenspeichern (2-1 - 2-8) zur Speicherung der Adressen, von welchen an die Daten der im zyklischen Puffer (1) gespeicherten Datenpakete dort gespeichert sind, vorgesehen ist.

## Claims

1. Method for transmitting a continuous data stream using a cyclic buffer (1) in which the data can be temporarily stored for specific times before and after their transmission,
**characterized in that**
the data are transmitted in packetized form, and **in that** the addresses at which the data in the data packets which are stored in the cyclic buffer (1) are stored are themselves temporarily stored in read-pointer temporary stores (2-1 - 2-8).

2. Method according to Claim 1,
**characterized in that**
the data to be transmitted are read from the cyclic buffer (1) immediately before their transmission and are prepared for transmission together with signalling and error protection data in a transmission buffer (3).

3. Method according to Claim 1 or 2,
**characterized in that**
data packets which are not transmitted without any errors are transmitted once again.

4. Method according to Claim 2 or 3,
**characterized in that**
the start address from which the data to be transmitted can be read from the cyclic buffer (1) are supplied from a read-pointer temporary store (2-1 - 2-8), at least when they are transmitted once again.

5. Apparatus for transmitting a continuous data stream having a cyclic buffer (1) in which the data can be temporarily stored for specific times before and after their transmission,
**characterized in that**
means are provided for transmitting the data in packetized form, and **in that** a large number of read-pointer temporary stores (2-1 - 2-8) are provided for storing the addresses at which the data in the data packets which are stored in the cyclic buffer (1) are stored.

## Revendications

1. Procédé de transmission d'un flux continu de données avec recours à un tampon cyclique (1) dans lequel les données peuvent être conservées temporairement pendant des durées définies avant et après leur transmission,
**caractérisé en ce que** les données sont transmises sous forme de paquets et **en ce que** les adresses auxquelles sont conservées les données des paquets de données conservés dans le tampon cyclique (1) sont conservées temporairement dans des mémoires de lecture (2-1 - 2-8) de pointeurs de lecture.

2. Procédé selon la revendication 1, **caractérisé en ce que** les données à transmettre sont lues immédiatement avant leur transmission depuis le tampon cyclique (1) et sont préparées dans un tampon d'émission (3) pour leur émission en même temps que des données de signalisation et de protection contre les erreurs.

3. Procédé selon la revendication 1 ou 2, **caractérisé en ce que** les paquets de données qui ne sont pas transmis sans erreurs sont de nouveau transmis.

4. Procédé selon la revendication 1 ou 3, **caractérisé en ce que** les adresses de départ auxquelles les données à transmettre doivent être lues dans le tampon cyclique (1) sont délivrées par une mémoire intermédiaire (2-1 - 2-8) de pointeurs de lecture, au moins en cas de nouvelle transmission des données.

5. Dispositif pour la transmission d'un flux continu de données avec recours à un tampon cyclique (1) dans lequel les données peuvent être conservées temporairement pendant des durées définies avant et après leur transmission, **caractérisé en ce qu'**il présente des moyens pour la transmission des données sous forme de paquets et **en ce qu'**une pluralité de mémoires intermédiaires (2-1 - 2-8) de pointeurs de lecture est prévue pour conserver les adresses auxquelles les données des paquets de données conservés dans le tampon cyclique (1) sont conservées.
